# EUROPEAN PATENT SPECIFICATION

(11) **EP 0 934 482 B1**
(45) Date of publication and mention of the grant of the patent: **28.05.2003**
(21) Application number: 97911144.0
(22) Date of filing: 29.10.1997
(51) Int. Cl.: F16K 41/04

(54) **RADIATOR VALVE AND TOOLS FOR SEALING RADIATOR VALVES**
HEIZKÖRPERVENTIL UND WERKZEUG ZUM ABDICHTEN EINES HEIZKÖRPERVENTILS
SOUPAPE DE RADIATEUR ET OUTILS SERVANT A RENDRE ETANCHES DES SOUPAPES DE RADIATEUR

(30) Priority: 31.10.1996 DE 19643990
(43) Date of publication of application: 11.08.1999
(73) Proprietor: Danfoss A/S, 6430 Nordborg (DK)
(72) Inventor: LARSEN, Arne, Borge, DK-8660 Skanderborg (DK); LARSEN, Hans, Erik, DK-8000 Aarhus C (DK)
(86) International application number: DK9700487
(87) International publication number: WO98019089

(56) References cited:
- CH-A- 579 735
- CH-A- 608 286
- DE-A- 3 246 446

## Description

The invention concerns a radiator valve with a housing, a closure element movable in the axial direction towards or away from a valve seat and a tappet movable in the axial direction, which is led to the outside through an opening in the housing, by which the opening is sealed through a sealing arranged in the housing and enclosing the tappet.

Such radiator valves must be operable from the outside, e.g. by means of a thermostatic element or another operating element. For this purpose the tappet is displaced from the outside. It is either fixedly connected with or lying adjacent to the closure element. In the opening direction the closure element is normally loaded by a spring.

The opening through which the tappet is protruding from the housing is often a weak point. In case of sealing failure, water may escape to the outside through this opening. Therefore, this sealing is often made double, e.g. by using two O-rings or round cord sealing rings arranged after each other between tappet and housing. When one sealing is damaged, the second sealing is still there to prevent the escape of water.

CH 608 286 describes a radiator valve, which has, right from the beginning, two sealings in the valve to make it tight. The design described here concerns a method, which makes it easy and simple to dismount the valve to change the "second" sealing, when it has become leaky.

However, the fixing of two sealings is expensive for the construction, thus increasing the production costs. When, on the contrary, only one sealing ring is provided, it must be arranged in a way that it is easy to replace. However, this also requires measures, which make the production of the valve more expensive. Besides, the replacement of the sealing ring is also rather expensive, and should thus be avoided. Further, a replaceable sealing ring requires access from the outside. However, this access makes it difficult to make the valve construction tight with simple means.

Thus it is the task of the invention to provide a valve, which is easy to produce and involves less problems at the occurrence of a leakage.

In a radiator valve as mentioned in the introduction, this is solved in that a sealing room surrounding the tappet is arranged on the outside of the housing, in which an additional sealing can be mounted from the outside, when the first sealing becomes leaky, and that the housing has a projection providing a fixing for a sealing holder.

When the valve gets leaky, i.e. water is escaping past the tappet, an additional sealing can easily be fixed. For this purpose two features are provided, which enable a fast and unproblematic fixing of the additional sealing. Firstly, a sealing room is provided, in which the sealing can be placed. Due to the sealing room, the additional sealing is placed in the correct position. Secondly, the housing is made so that a sealing holder can be fixed. This sealing holder retains the additional sealing, also against fluid which is pressed out. According to the invention, it is thus possible to use a relatively simple radiator valve with only one internal sealing ring. In many cases, this sealing ring will last for the whole life of the valve. In case that it gets leaky, the valve can be sealed from the outside requiring no dismounting or mounting measures. The valve can remain on the radiator. Production costs will be saved, as only one sealing ring is required. Valves remaining tight will require no further measures anyway. Only the valves which actually get leaky will require additional costs, meaning that statistically the total costs will reduce. Of course, also the new sealing ring can become leaky. However, it can be reached from the outside, and can thus be replaced.

In a preferred embodiment a housing insert is arranged in and protruding towards the outside from an external housing, by which the projection is arranged in the protruding area. This gives improved access to the place for the fixing of the additional sealing. When the sealing holder must not be fixed from the same side as the sealing, but from a direction displaced by 90°, the placing of the additional sealing in the housing insert also facilitates the fixing of the sealing holder, as the housing insert then has a smaller diameter, and the travel of the sealing holder in the housing is shorter.

Preferably, the projection has a surface with a component arranged vertically to the axial direction. Thus the sealing holder is retained in the housing by form fitting, and the sealing cannot be pressed out.

Preferably, the sealing holder is arrestable through a movement in one plane, to which the axial direction is lying vertically. Thus the sealing holder can be moved immediately under the surface of the projection, causing stable conditions to rule immediately after the fixing.

Here it is especially preferred that the sealing holder is made as a pin arrangement, fixable in a corresponding opening arrangement in the housing forming the projection. The insertion of the pin arrangement, i.e. one or more pins, across the axial direction of the housing requires only little effort. Thus the additional sealing is arrested in the housing. The pins of the pin arrangement may be barbed to impede or prevent the drawing out, or they can be fixed in the housing by press fitting.

In this connection it is especially preferred that the pin arrangement is made as a U-shaped split pin. Thus two pins can be fixed simultaneously. The U-shape secures that the pins are not pressed through, as in the fixed state the bottom of the U rests on the housing and prevents a further pressing in. However, normally two pins will be sufficient to hold the additional sealing.

It is also advantageous to arrange a supporting disc between the pin arrangement and the additional sealing. The forces exerted on the sealing by the sealing holder can then be equalised.

In an alternative embodiment it is provided that the sealing holder is made as a disc with radially extending projections, by which the projection has a first section in the housing, in which a first recess is provided, running substantially in the axial direction, and a second section, in which a second recess is provided, extending across said second section and being covered, at least partly, in the axial direction. The projections of the disc, having in the middle a hole for the tappet, can then be fixed in the first recess and be moved towards the sealing in the axial direction. As soon as a certain depth has been reached, in which the projections reach below the cover of the second recess, the disc can be turned. I.e. the disc is fixed in the housing with a sort of bayonet lock, and then retains the additional sealing. In this connection it is advantageous that if one component is sufficient, an additional supporting disc is no longer required. Torque application means may be provided in the disc, e.g. holes, to enable a turning of the disc in the suppressed state. Like other sealing holders, the disc will be pressed outwards by the elasticity of the additional sealing, and is therefore fixed in the housing. This embodiment is especially advantageous in limited spaces, where the valve can only be reached axially.

In a third embodiment it may be provided that the sealing holder is shaped as a ring with sections yielding radially outwards. In this case the housing must be made with a corresponding recess. Thus the ring can simply be pressed onto the additional sealing and thus engages in the housing. In fact this is the most simple fixing opportunity. Also here the space requirement for fixing is small. Only an axial movement is required.

In a fourth alternative embodiment the sealing holder can be made as a resilient ring. For the fixing, the ring is compressed to reduce its diameter. After fixing in the recess the ring reexpands. Also here an access is only required in the axial direction. Parts customary in the trade can be used.

Finally, part of the housing can be made resilient, and the sealing holder is then simply a plate. This plate is then fixed axially and engages behind the resilient housing parts.

Advantageously, the additional sealing is fixed on the sealing holder by means of a non-heat resistant adhesive. This facilitates fixing, as additional sealing and sealing holder can be axially displaced and fixed together. During operation, when the valve gets hot, the connection between additional sealing and sealing holder dissolves.

Preferably the additional sealing is an O-ring. Such sealings are also called round cord sealing rings. They can be arranged relatively tight around the tappet and are thus easy to fix.

In a preferred embodiment the outer end of the opening comprises a lubricant storage chamber open towards the outside. This lubricant storage chamber may be filled with grease or another lubricant. However, this lubricant may already be available on fixing the additional sealing. In this case it serves the purpose of lubricating the tappet and thus of relieving the sealing inside the housing of frictional forces. However, it is especially advantageous to fill this storage chamber for the first time or again on or shortly before the fixing of the additional sealing, in order to facilitate the tappet movement in relation to the additional sealing. This embodiment prevents a too high increase in the operational force due to the fixing of the additional sealing.

The invention also concerns a tool for the sealing of a radiator valve by which an additional sealing is arranged on a first slide movable in the axial direction, said slide being arranged in a housing.

Such a tool enables the sealing of a leaky valve at low cost. The tool is placed on the leaky valve. The first slide is operated. As the additional sealing is arranged on this slide, e.g. on the front, the additional sealing is thus pushed onto the tappet and into the sealing room.

In a preferred embodiment the tool has a pin arrangement on a second slide movable across the first slide. The first slide retains the additional sealing in the valve. Then the second slide is operated, and the pin arrangement, e.g. the U-shaped split pin mentioned above, is pushed into the housing across the first slide. Thus the sealing is secured. As it is not necessary for the second slide to intrude the valve, the tool can be removed from the valve immediately after this operation. The complete auxiliary sealing arrangement, i.e. the additional sealing, the sealing holder and the support disc, if any, can be preinstalled in the tool. As often small parts are concerned here, this will facilitate the handling. Their position is automatically set correctly. This especially applies when the housing is unsymmetrically shaped, so that the tool can only be placed in a predetermined angle position.

Preferably, the width of the first slide is reduced in a direction across the movement directions of the two slides. Thus the first slide can press the sealing into the sealing room and hold it there, while the pin arrangement can be pushed sidewards past it.

Advantageously, a lubricant storage is provided on the first slide. On fixing the lubricant is then brought into the valve.

Advantageously, the second slide is shaped as a sledge mounted displaceably on a tool housing. This especially enables the installation of a U-shaped split pin.

Preferably the tool is made of plastic. The production is then relatively cheap and it can be made as a one way tool.

In the following the invention is described on the basis drawings of a preferred embodiment, showing.
- Fig. 1.: a schematic section through a radiator valve
- Fig. 2.: a schematic presentation from 3 sides of a part of the radiator valve with mounting tool for an additional sealing, partly as section
- Fig. 3.: a second embodiment of the tool
- Fig. 4.: a third embodiment for fixing the additional sealing
- Fig. 5.: a fourth embodiment for fixing the additional sealing
- Fig. 6.: a fifth embodiment

A radiator valve 1 has a housing with a housing insert 2 and an external housing 3. A valve seat 4 and a closing element 5, movable in the axial direction 6 towards or away from the valve seat, are arranged in the housing. The movement away from the valve seat 4 is effected by way of a pressure spring 7, and towards the valve seat by way of the pressure from a tappet, led through an opening 9 in the housing insert.

The opening 9 is sealed with an O-ring 10 or a round cord sealing ring, arranged inside 11 the housing. It surrounds the tappet 8 sealingly. When a water pressure is building up inside 11 the housing 2, 3, the O-ring 10 is pressed against both the tappet 8 and the inside of the housing insert 2, and thus seals the opening 9.

During operation, after numerous movements of the tappet 8, a leak may occur, e.g. when the O-ring 10 is worn locally. In this case water or another heating fluid will penetrate to the outside along the tappet 8 through the opening 9.

For such a case, measures have now been taken on the radiator valve 1.

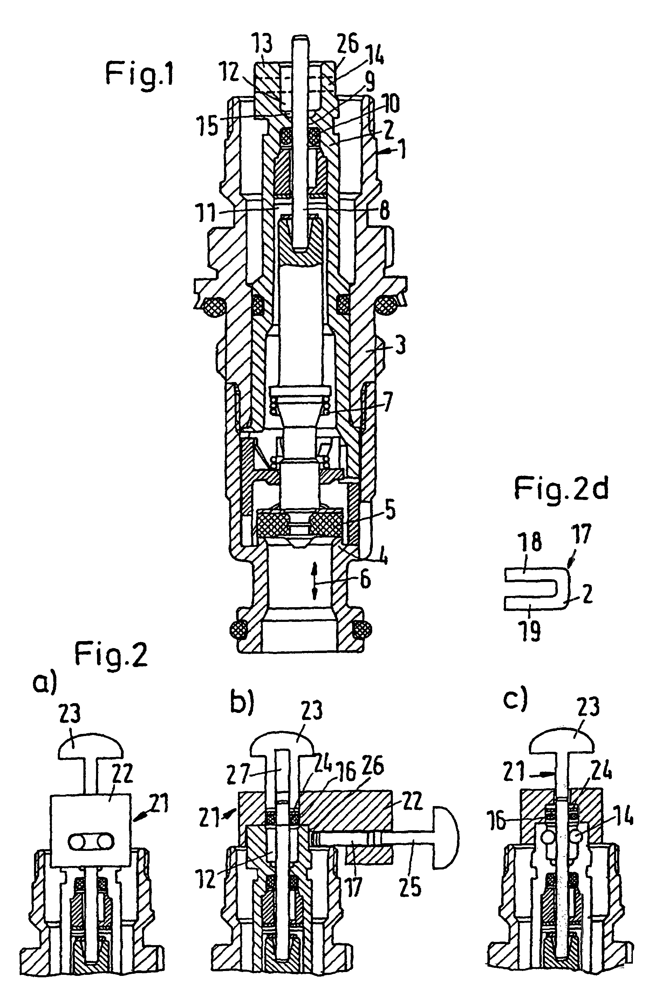

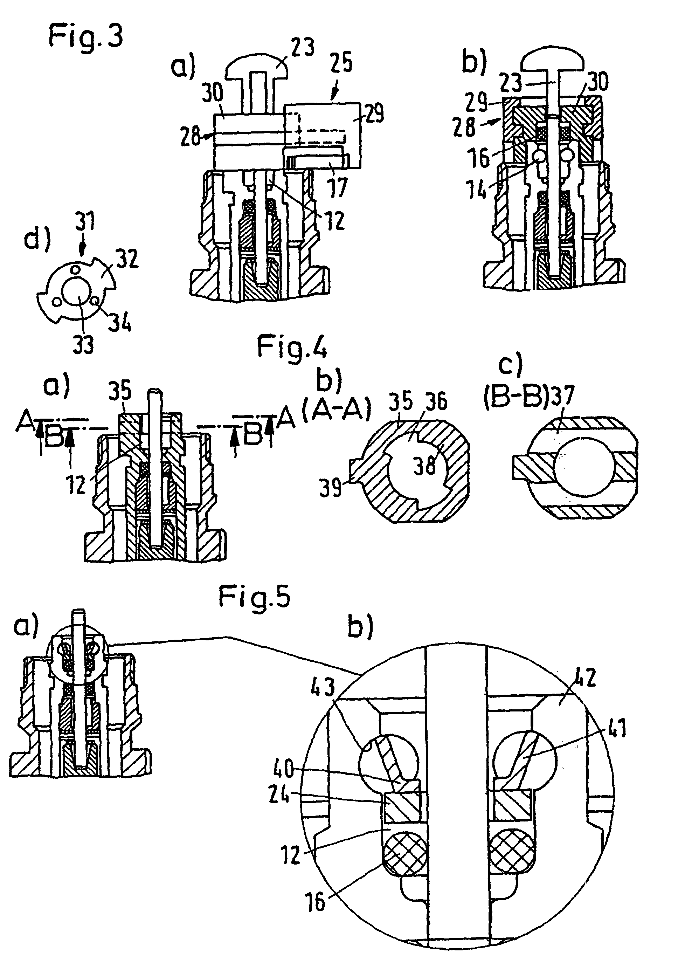

A sealing chamber 12 is provided around the tappet 8 in the housing insert 2. The sealing chamber 12 is also surrounded by the housing insert 2. For this purpose the housing insert has a projecting part 13 protruding from the external housing 3. Bores 14 are provided in this projecting part 13. The purpose is explained below in connection with the figures 2 and 3.

Further, a lubricant storage room 15 is provided between the sealing chamber 12 and the opening 9, in which a lubricant, e.g. grease, can be arranged. A movement of the tappet 8 in the axial direction 6 will cause some lubricant to adhere to the tappet, so that the O-ring 10 is only exposed to a minimum of friction.

Besides, the tappet 8 can be operated from the outside in the commonly known way, e.g. by means of a thermostatic operating element.

If the valve 1 should start leaking, an additional sealing 16 can be arranged in the sealing chamber 12, for which purpose the tool 21 shown in fig. 2 is used. To prevent this additional sealing 16 from being pressed out of the sealing chamber again, when axial forces, e.g. friction forces from the tappet or pressure from emerging water, should occur, a sealing holder 17 can be inserted in the bores 14. This sealing holder can be in the form of a pin arrangement, e.g. two parallel pins 18, 19 connected with each other to an U-shape by means of a basis 20 (fig. 2d). In this case; the sealing holder 17 forms a U-shaped split pin.

As the handling of relatively small parts, like additional sealing 16 and sealing holder 17, especially in connection with a possibly hot radiator valve, can be rather difficult, the tool 21 is provided, which can be used for the fixing of these parts. The tool 21 has a housing 22, in which a first slide 23 is arranged so that it is movable in the axial direction. The additional sealing 16 is arranged on the slide 23, if necessary through the insertion of a support ring 24. A lubricant supply, not shown, e.g. a small piece of grease may be arranged at the bottom of the additional sealing 16.

Further, a second slide 25 is arranged in the housing 22, which slide is slidable across the movement direction of the first slide 23. The sealing holder 17 is arranged on the slide 25. The fact that a part is arranged on slide 23 or 25 means that it is positioned in the housing 22 in a way that it moves when slide 23 or 25 moves, and is pressed out of the housing 22 in the desired direction.

To make sure that the split pin forming the sealing holder 17 hits the bores 14, the protruding part 13 of the housing insert 2 is flattened on one side, i.e. it has a bearing surface 26 corresponding to a similar opposing surface of the housing 22.

As appears from a comparison of figs. 2a and 2c with fig. 2b, the first slide 23 has a reduced width in a direction being vertical to the movement direction of both slides 23, 25. In the movement direction of the second slide 25, the first slide 23 has, at least with the part entering the housing 22, approximately a width corresponding to the diameter of the sealing chamber 12. For this purpose, it has a recess 27 in the middle, with which it can be pushed onto the tappet 8. Transversely, however, the first slide 23 is thinner, so that it fits between the two pins of the split pin shaped sealing holder 17.

Now, the insertion of an additional sealing in a leaking valve is relatively simple. The housing 22 of the tool 21 is placed on the protruding part 13 of the housing insert 2 and adjusted to the correct angle position by means of the bearing surface 26. Then the first slide 23 is moved in the axial direction. It then pushes the additional sealing 16 and the support ring 24 into the sealing chamber 12, by which also grease as lubricant, if any, can be passed into the lubricant store 15. The first slide is kept depressed or remains in the depressed position due to friction forces. Then the second slide 25 is activated and pushes the split pin shaped sealing holder 17 with its two pins 18, 19 into the bores 14, until the basis 20 rests against the protruding part 13 of the housing insert 2. The bores 14 in the housing insert 2 are at least so deep that the sealing holder in fig. 2b is anchored in the housing insert 2 to the right and to the left of the sealing chamber 12. This gives a very stable position of the additional sealing 16 in the sealing chamber 12. Also when axial forces occur, the additional sealing 16 can no longer be displaced from the sealing chamber 12.

Even with depressed slides 23, 25, the tool 21 can be removed from the valve 1. The housing 22 can be made of plastic, so that the tool 21 as a whole is a one-way unit.

Fig. 3 shows a modified embodiment, in which a different tool 28 is used. The same parts have the same reference numbers as in figs. 1 and 2. Compared with the embodiment according to fig. 2, the change is that the second slide 25 is made as a sledge 29 movable on the housing 30 across the movement direction of the first slide 23. The sealing holder 17 is arranged in the carriage 29 in the form of a split pin. The mode of operation is like that of the tool 21 in fig. 2. After fitting and operating the first slide 23, the carriage 29 is displaced in the direction of the first slide 23, so that the split pin can enter the bores 14 as sealing holder 17.

The bores 14 are not supposed to having circular sections, and also the pins 18 and 19 should not be round. It is not even necessary that the section shapes of the pins 18, 19 correspond to those of the bores 14. It is only required that the pins 18, 19 fit into the bores 14 and there find an abutment in the axial direction. Then the additional sealing 16 can be secured in the sealing chamber 12 by a movement of the sealing holder 17 across the axial direction of the sealing chamber 12.

In fig. 4 a modified embodiment is used. In this connection fig. 4b shows a section A-A and fig. 4c shows a section B-B according to fig. 4a. A disc 31 with at least two radially protruding projections 32 (fig. 4d) is used to retain the additional sealing, not shown here, in the sealing chamber 12. This disc has a hole 33 in the middle, through which the tappet 8 fits. In the remaining ring several holes 34 are provided, with which a turning tool can engage. This tool can also be used to push the disc and the additional sealing axially into the housing insert. For this purpose the additional sealing may be fixed on the disc 31 by means of a non-heat resistant adhesive to facilitate the fixing. During operation, when the valve gets hot, the adhesive will dissolve, and the disc becomes independent of the additional sealing, thus only retaining it in the axial direction.

A comparison of figs. 4b and 4d shows that the disc 31 fits into the modified housing insert 35, having for this purpose the same sectional shape as the disc 31. It can be seen that the housing insert 35 has cut-outs 36 in the shape of a recess in the axial direction, viz. one for each projection 32. Thus the disc 31 can be inserted in the housing insert 35 in a certain angle position, and then be pushed down in this position, i.e. in the direction of the sealing space 12. When a certain depth has been reached, the cut-out 36 goes into a second part 37, running in the axial direction, and at least partly covered in the axial direction, e.g. by a housing part 38. When the disc 31 is turned in this depth, e.g. by 90°, the projections 32 will get under the housing part 38.. The disc 31 is then retained. In this embodiment an additional support disc can be avoided, as the sealing ring is supported by the disc 31.

As appears from figs. 4b and c, a tool positioning required for this purpose can also be made in that the housing insert 35 has a positioning projection 39.

Finally, fig. 5 shows a further alternative, by which the additional sealing 16 is held by a sealing holder 40, having sections 41 yielding radially outwards, with the support ring 24 as washer. For this purpose the housing insert 42 has corresponding relief cut-outs 43. Thus the fixing can simply be made in that the additional sealing 16, the support ring 24 and the sealing holder 40 are pushed forward in the axial direction until the resilient sections 41 engage behind the relief cut-outs 43.

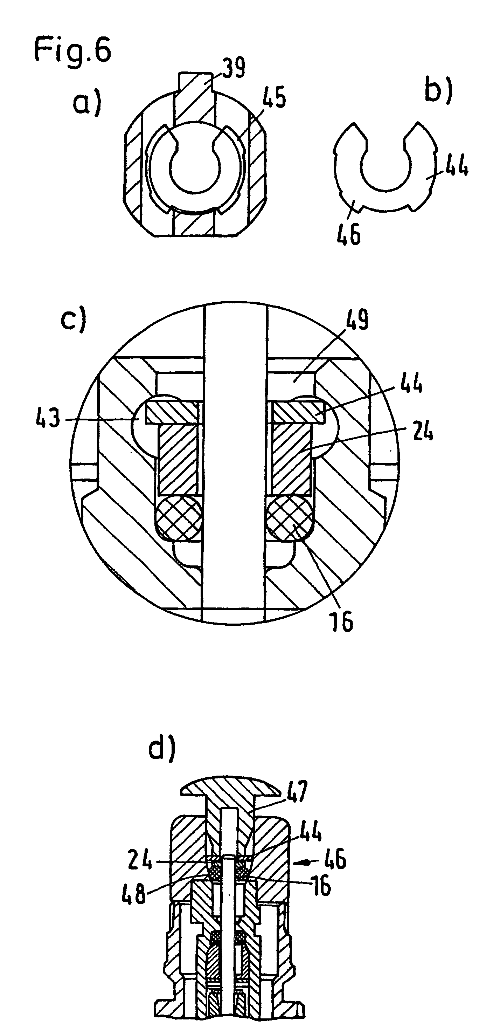

Fig. 6 shows a different embodiment in which the sealing holder 44 is made as a resilient ring. Fig. 6a corresponds the view of fig. 4c, by which, for convenience, recesses 45 have been introduced, which can be inserted in the projections 46 in the resilient ring 44. For the fitting the tool 46 shown in fig. 6d is provided, in which the resilient ring 44 is arranged on a tappet 47. The support ring 24 and the additional sealing 16 are also fixed in the tool. The opening, in which the tappet 47 is arranged, narrows with a conical or funnel-shaped wall 48 in the direction of the valve. When the tappet 47 is pressed downwards, the resilient ring 44 is compressed radially and can then enter the opening 49 on the valve. As soon as it reaches the relief cut-outs 43, it yields radially outwards, and the additional sealing 16 is retained in the valve.

## Claims

1. Radiator valve (1) with a housing (2), a closure element movable in the axial direction towards or away from a valve seat (4) and a tappet (8) movable in the axial direction, which is led to the outside through an opening in the housing (2), by which the opening is sealed through a sealing (10) arranged in the housing (2) and enclosing the tappet (8), **characterised in that** a sealing room (12) surrounding the tappet (8) is arranged on the outside of the housing (2), in which an additional sealing (16) can be mounted from the outside, when the first sealing (10) becomes leaky, and that the housing (2) has a projection (14, 36, 37, 43) providing a fixing for a sealing holder (17, 31, 40).

2. Valve according to claim 1, **characterised in that** a housing insert (2) is arranged in and protruding towards the outside from an external housing (3), by which the projection is arranged in the protruding (13) area.

3. Valve according to one of the claims 1 or 2, **characterised in that** the projection (14, 36, 37, 43) has a surface with a component arranged vertically to the axial direction (6).

4. Valve according to one of the claims 1 to 3, **characterised in that** the sealing holder (17, 31, 40) is arrestable through a movement in one plane, to which the axial direction (6) is lying vertically.

5. Valve according to one of the claims 1 to 4, **characterised in that** the sealing holder (17) is made as a pin arrangement, fixable in a corresponding opening arrangement (14) in the housing (2) forming the projection.

6. Valve according to claim 5, **characterised in that** the pin arrangement is made as a U-shaped split pin.

7. Valve according to claim 5 or 6, **characterised in that** a supporting disc (24) is arranged between the pin arrangement and the additional sealing (16).

8. Valve according to one of the claims 1 to 4, **characterised in that** the sealing holder (31) is made as a disc with radially extending projections (32), by which the projection (36, 37) has a first section (36) in the housing, in which a first recess is provided, running substantially in the axial direction (6), and a second section (37), in which a second recess is provided, extending across said second section and being covered, at least partly, in the axial direction.

9. Valve according to one of the claims 1 to 4, **characterised in that** the sealing holder (40) is shaped as a ring with sections (41) yielding radially outwards.

10. Valve according to one of the claims 1 to 4, **characterised in that** the sealing holder (44) is made as a resilient ring.

11. Valve according to one of the claims 1 to 4, **characterised in that** part of the housing is resilient, and the sealing holder is a plate engaging behind this part.

12. Valve according to one of the claims 1 to 11, **characterised in that** the additional sealing (16) is fixed on the sealing holder (31, 40) by means of a non-heat resistant adhesive.

13. Valve according to one of the claims 1 to 12, **characterised in that** the additional sealing (16) is made as an O-ring.

14. Valve according to one of the claims 1 to 13, **characterised in that** the outer end of the opening (9) comprises a lubricant storage chamber (15) open towards the outside.

15. Tool (21) for the sealing of a radiator valve according to one of the claims 1 to 14, **characterised in that** an additional sealing (16) is arranged on a first slide (23) movable in the axial direction, said slide being arranged in a housing (22).

16. Tool according to claim 15, **characterised in that** a pin arrangement is arranged on a second slide (25) movable across the first slide (23).

17. Tool according to claim 15, **characterised in that** the width of the first slide (23) is reduced in a direction across the movement directions of the two slides (23, 25).

18. Tool according to one of the claims 15 to 17, **characterised in that** a lubricant storage is provided the first slide (23).

19. Tool according to one of the claims 16 to 18, **characterised in that** the second slide is shaped as a sledge (29) mounted displaceably on a tool housing (30).

20. Tool according to one of the claims 15 to 19, **characterised in that** the tool is made of plastic.

21. Tool according to one of the claims 15 to 20, **characterised in that** a wall (38) surrounding the slide (47) narrows to a funnel shape.

## Patentansprüche

1. Heizkörperventil (1) mit einem Gehäuse (2), einem Verschlußstück, das in Axialrichtung auf einen Ventilsitz (4) zu oder davon weg bewegbar ist, und einem in Axialrichtung bewegbaren Stößel (8), der durch eine Öffnung des Gehäuses (2) nach außen geführt ist, wobei die Öffnung durch eine im Gehäuse (2) angeordnete und den Stößel (8) umschließende Dichtung (10) abgedichtet ist, **dadurch gekennzeichnet, daß** außen am Gehäuse (2) ein den Stößel (8) umgebender Dichtungsraum (12) angeordnet ist, in den eine Zusatzdichtung (16) von aussen einsetzbar ist, wenn die erste Dichtung undicht wird, und daß das Gehäuse (2) eine Ausformung (14, 36, 37, 43) aufweist, in der eine Dichtungshalterung (17, 31, 40) arretierbar ist.

2. Ventil nach Anspruch 1, **dadurch gekennzeichnet, daß** das Gehäuse einen Gehäuseeinsatz (2) aufweist, der in ein Außengehäuse (3) eingesetzt ist und aus diesem nach außen vorsteht, wobei die Ausformung in dem vorstehenden Bereich (13) angeordnet ist.

3. Ventil nach Anspruch 1 oder 2, **dadurch gekennzeichnet, daß** die Ausformung (14, 36, 37, 43) eine Fläche mit einer Komponente senkrecht zur Axialrichtung (6) aufweist.

4. Ventil nach einem der Ansprüche 1 bis 3, **dadurch gekennzeichnet, daß** die Dichtungshalterung (17, 31, 40) durch eine Bewegung in einer Ebene arretierbar ist, zu der die Axialrichtung (6) senkrecht liegt.

5. Ventil nach einem der Ansprüche 1 bis 4, **dadurch gekennzeichnet, daß** die Dichtungshalterung (17) als Stiftanordnung ausgebildet ist, die in eine entsprechende Öffnungsanordnung (14) im Gehäuse (2), die die Ausformung bildet, einsetzbar ist.

6. Ventil nach Anspruch 5, **dadurch gekennzeichnet, daß** die Stiftanordnung durch einen U-förmigen Splint gebildet ist.

7. Ventil nach Anspruch 5 oder 6, **dadurch gekennzeichnet, daß** zwischen der Stiftanordnung und der Zusatzdichtung (16) eine Stützscheibe (24) vorgesehen ist.

8. Ventil nach einem der Ansprüche 1 bis 4, **dadurch gekennzeichnet, daß** die Dichtungshalterung (31) als Scheibe mit radial vorstehenden Vorsprüngen (32) ausgebildet ist, wobei die Ausformung (36, 37) im Gehäuse einen ersten Abschnitt (36) aufweist, in dem eine im wesentlichen in Axialrichtung (6) verlaufende erste Ausnehmung vorgesehen ist, und einem zweiten Abschnitt (37), in dem eine quer dazu und zumindest teilweise in Axialrichtung abgedeckte zweite Ausnehmung vorgesehen ist.

9. Ventil nach einem der Ansprüche 1 bis 4, **dadurch gekennzeichnet, daß** die Dichtungshalterung (40) als Ring mit radial nach außen federnden Abschnitten (41) ausgebildet ist.

10. Ventil nach einem der Ansprüche 1 bis 4, **dadurch gekennzeichnet, daß** die Dichtungshalterung (44) als Federring ausgebildet ist.

11. Ventil nach einem der Ansprüche 1 bis 4, **dadurch gekennzeichnet, daß** ein Teil des Gehäuses federnd ausgebildet ist und die Dichtungshalterung als Platte hinter dem Teil einrastet.

12. Ventil nach einem der Ansprüche 1 bis 11, **dadurch gekennzeichnet, daß** die Zusatzdichtung (16) an der Dichtungshalterung (31, 40) mit Hilfe eines nicht wärmebeständigen Klebers befestigt ist.

13. Ventil nach einem der Ansprüche 1 bis 12, **dadurch gekennzeichnet, daß** die Zusatzdichtung (16) als O-Ring ausgebildet ist.

14. Ventil nach einem der Ansprüche 1 bis 13, **dadurch gekennzeichnet, daß** am äußeren Ende der Öffnung (9) eine nach außen offene Schmiermittelvorratskammer (15) angeordnet ist.

15. Werkzeug (21) zum Abdichten eines Heizkörperventils nach enem der Ansprüche 1 bis 14, **dadurch gekennzeichnet, daß** es eine Zusatzdichtung (16) an einem in Axialrichtung beweglichen und in einem Gehäuse (22) angeordneten ersten Schieber (23) aufweist.

16. Werkzeug nach Anspruch 15, **dadurch gekennzeichnet, daß** es eine Stiftanordnung an einem quer zum ersten Schieber (23) bewegbaren zweiten Schieber (25) aufweist.

17. Werkzeug nach Anspruch 16, **dadurch gekennzeichnet, daß** der erste Schieber (23) in eine Richtung quer zu den Bewegungsrichtungen der beiden Schieber (23, 25) eine verminderte Breite aufweist.

18. Werkzeug nach einem der Ansprüche 15 bis 17, **dadurch gekennzeichnet, daß** am ersten Schieber (23) ein Schmiermittelvorrat vorgesehen ist.

19. Werkzeug nach einem der Ansprüche 16 bis 18, **dadurch gekennzeichnet, daß** der zweite Schieber als Schlitten (29) ausgebildet ist, der auf einem Werkzeuggehäuse (30) verschiebbar ist.

20. Werkzeug nach einem der Ansprüche 15 bis 19, **dadurch gekennzeichnet, daß** es aus Kunststoff gebildet ist.

21. Werkzeug nach einem der Ansprüche 15 bis 20, **dadurch gekennzeichnet, daß** eine den Schieber (47) umgebende Wand (38) trichterförmig zusammenläuft.

## Revendications

1. Soupape de radiateur (1) comprenant un carter (2), un organe de fermeture susceptible de se déplacer dans la direction axiale en se rapprochant ou en s'éloignant d'un siège de soupape (4) et un poussoir (8) susceptible de se déplacer dans la direction axiale, qui est amené vers l'extérieur à travers une ouverture dans le carter (2), par lequel l'ouverture est fermée hermétiquement grâce à un dispositif d'étanchéité (10) agencé dans le carter (2) et englobant le poussoir (8), **caractérisée en ce qu'**une chambre d'étanchéité (12) entourant le poussoir (8) est agencée sur l'extérieur du carter (2), dans laquelle un dispositif d'étanchéité supplémentaire (16) peut être disposé à partir de l'extérieur lorsque le premier dispositif d'étanchéité (10) perd de sa capacité d'herméticité, et **en ce que** le carter (2) présente une saillie (14, 36, 37, 43) qui procure un point de fixation pour un support de dispositif d'étanchéité (17, 31, 40).

2. Soupape selon la revendication 1, **caractérisée en ce qu'**une pièce rapportée de carter (2) est agencée dans et se projette en saillie vers l'extérieur depuis le carter externe (3), **caractérisée en ce que** la saillie se trouve agencée dans la partie saillante (13).

3. Soupape selon l'une des revendications 1 ou 2, **caractérisée en ce que** la saillie (14, 36, 37, 43) comporte une surface sur laquelle un composant est agencé verticalement dans la direction axiale (6).

4. Soupape selon l'une des revendications 1 à 3, **caractérisée en ce que** le support de dispositif d'étanchéité (17, 31, 40) est susceptible d'arriver en butée par un mouvement sur un plan, par rapport auquel la direction axiale (6) se trouve être à la verticale.

5. Soupape selon l'une des revendications 1 à 4, **caractérisée en ce que** le support de dispositif d'étanchéité (17) se présente sous la forme d'un agencement formant goupille susceptible d'être introduit dans un agencement d'ouverture correspondant (14) dans le carter (2) formant la saillie.

6. Soupape selon la revendication 5, **caractérisée en ce que** l'agencement formant goupille se présente sous la forme d'une goupillé fendue en forme de U.

7. Soupape selon la revendication 5 ou 6, **caractérisée en ce qu'**un disque de support (24) est disposé entre l'agencement formant goupille et le dispositif d'étanchéité supplémentaire (16).

8. Soupape selon l'une des revendications 1 à 4, **caractérisée en ce que** le support de dispositif d'étanchéité (31) se présente sous la forme d'un disque ayant des saillies qui se projettent radialement (32), la saillie (36, 37) comportant une première section (36) dans le carter, dans laquelle un premier évidement est formé qui se prolonge sensiblement dans la direction axiale (6), et une deuxième section dans laquelle un deuxième évidement est formé qui se prolonge à travers ladite deuxième section et qui est recouvert, au moins partiellement, dans la direction axiale.

9. Soupape selon l'une des revendications 1 à 4, **caractérisée en ce que** le support de dispositif d'étanchéité (40) se présente sous la forme d'un anneau ayant des sections (41) qui s'étendent en biais radialement vers l'extérieur.

10. Soupape selon l'une des revendications 1 à 4, **caractérisée en ce que** le support de dispositif d'étanchéité (44) se présente sous la forme d'un anneau résilient.

11. Soupape selon l'une des revendications 1 à 4, **caractérisée en ce qu'**une partie du carter est résiliente, et **en ce que** le support de dispositif d'étanchéité est une plaque qui s'engage derrière cette partie.

12. Soupape selon l'une des revendications 1 à 11, **caractérisée en ce que** le dispositif d'étanchéité supplémentaire (16) est fixé sur le support de dispositif d'étanchéité (31, 40) au moyen d'un adhésif non résistant à la chaleur.

13. Soupape selon l'une des revendications 1 à 12, **caractérisée en ce que** le dispositif d'étanchéité supplémentaire (16) se présente sous la forme d'un joint torique.

14. Soupape selon l'une des revendications 1 à 13, **caractérisée en ce que** l'extrémité extérieure de l'ouverture (9) comprend une chambre de stockage de lubrifiant (15) qui débouche vers l'extérieur.

15. Outil (21) servant à rendre étanche une soupape de radiateur selon l'une des revendications 1 à 14, **caractérisé en ce qu'**un dispositif d'étanchéité supplémentaire (16) est agencé sur une première glissière (23) susceptible de se déplacer dans la direction axiale, ladite glissière étant agencée dans un carter (22).

16. Outil selon la revendication 15, **caractérisé en ce qu'**un agencement formant goupille est placé sur une deuxième glissière (25) susceptible de se déplacer sur la longueur de la première glissière (23).

17. Outil selon la revendication 15, **caractérisé en ce que** la largeur de la première glissière (23) se réduit dans une direction le long des directions de mouvement des deux glissières (23, 25).

18. Outil selon l'une des revendications 15 à 17, **caractérisé en ce qu'**une chambre de stockage de lubrifiant est prévue sur la première glissière (23).

19. Outil selon l'une des revendications 16 à 18, **caractérisé en ce que** la deuxième glissière se présente sous la forme d'un patin (29) fixé de manière à pouvoir se déplacer sur un carter d'outil (30).

20. Outil selon l'une des revendications 15 à 19, **caractérisé en ce que** l'outil est en plastique.

21. Outil selon l'une des revendications 15 à 20 **caractérisé en ce qu'**une paroi (38) entourant la glissière (47) se rétrécit pour prendre la forme d'un entonnoir.
